# EUROPEAN PATENT SPECIFICATION

(11) **EP 3 196 687 B1**
(45) Date of publication and mention of the grant of the patent: **11.03.2020**
(21) Application number: 17151071.2
(22) Date of filing: 11.01.2017
(51) Int. Cl.: G02B 27/01, G06F 3/01, G06F 1/16

(54) **HEAD MOUNTED DEVICE**
KOPFMONTIERTE VORRICHTUNG
VISIOCASQUE

(30) Priority: 20.01.2016 JP 2016009309
(43) Date of publication of application: 26.07.2017
(60) Divisional application: 20151026.0
(73) Proprietor: Canon Kabushiki Kaisha, Tokyo 146-8501 (JP)
(72) Inventor: NAGATA, Yuya, Ohta-ku, Tokyo (JP); TORIIHARA, Shigeru, Ohta-ku, Tokyo (JP)
(74) Representative: Houle, Timothy James

(56) References cited:
- EP-A1- 1 178 746
- EP-A2- 0 679 919
- JP-A- 2009 111 512
- US-A1- 2013 329 933
- US-A1- 2013 340 150
- US-A1- 2015 219 901
- Anonymous: "About Face Virtual Reality Comfort and Hygiene System by Eric Greenbaum - Kickstarter", , 29 September 2014 (2014-09-29), XP055466677, Retrieved from the Internet: URL:https://www.kickstarter.com/projects/5 43401688/about-face-virtual-reality-comfor t-and-hygiene-sys [retrieved on 2018-04-12]
- Anonymous: "SPRUCE Upholstery Spruce Upholstery Tip: Venting Leather and Vinyl Cushions with Grommets", , 26 September 2013 (2013-09-26), XP055467627, Retrieved from the Internet: URL:https://www.spruceaustin.com/tips/spru ce-upholstery-tip-venting-leather-and-viny l-cushions-with-grommets/ [retrieved on 2018-04-17]

## Description

### BACKGROUND OF THE INVENTION

### Field of the Invention

The present invention relates to a head mounted device configured to be mounted on a head portion of a user when used.

### Description of the Related Art

There has been a head mounted device including a display unit configured to display images, and a user wears the head mounted device on a head portion of the user to use it. Such a head mounted device is called a head mounted display (HMD) and is capable of presenting to a moving user a video image of a virtual object, etc. In recent years, HMDs are increasingly used in various fields.

An HMD is mounted using a mechanism described below. For example, a belt-shaped member is secured around the head portion, or a frontal portion pad and an occipital portion pad are provided and the occipital portion pad is moved forward or backward to push or loosen the head portion. In any case, the HMD mounting mechanism is required to hold the display unit in a position and an orientation so as to enable the user to correctly recognize the video image, and is also required to provide comfort even when the HMD is used for a long time.

Japanese Patent Application Laid-Open No. 2009-111512 discusses a head mounted device including pressing pads respectively provided for a forehead portion, an occipital portion, temporal portions, and side portions of the occipital portion between each of the temporal portions and the occipital portion. Further, the pressing pads for the occipital portion and the side portion of the occipital portion each include a pressing force generation mechanism. When the head mounted device is mounted, pressing force is applied such that the pressing force from the pressing pad for the side portion of the occipital portion is greater than the pressing force from the pressing pad for the occipital portion. This mechanism can securely hold the main body of the device on the head portion without making the user feel uncomfortable in the head mounted device even when the pressing force applied to the head portion is increased. Meanwhile, the display unit is the main body of HMD and accounts for a major portion of the total weight. Thus, even in the case of holding the head mounted device using the mechanism discussed in Japanese Patent Application Laid-Open No. 2009-111512, the pressing force may have to be increased in order to properly hold the display unit in front of the eyes of the user. The pressing pads include an elastic member, but when the pressing force is increased, the user may no longer feel comfortable in the head mounted device. Especially, it is undesirable to press hard on a portion that is sensitive to a press such as a portion near the temporal portions. US2015/0219901A1 describes a mounting apparatus for dispersing a weight of a device, the mounting apparatus comprising a main body configured to support the device and configured to mount on a head of a user and a support mechanism, connected to the device and the main body, comprising an elastic member configured to have a first length when the mounting apparatus is not mounted on the head of the user such that a first biasing force is applied; and have a second length larger than the first length when the mounting apparatus is mounted on the head of the user such that the weight of the device is dispersed by applying a second biasing force, which is greater than the first biasing force, with a force component in the vertical direction to the device.

### SUMMARY OF THE INVENTION

The present invention is directed to a head mounted device that can be held properly on a head portion of a user without making the user feel uncomfortable in the head mounted device.

According to an aspect of the present invention, there is provided a head mounted device as specified in claims 1 to 10.

Further features of the present invention will become apparent from the following description of exemplary embodiments with reference to the attached drawings.

### BRIEF DESCRIPTION OF THE DRAWINGS

Fig. 1 schematically illustrates a head mounted device.
Figs. 2A and 2B each illustrate an internal structure of a head portion pad.
Figs. 3A, 3B, and 3C schematically illustrate a head portion pad according to an example which does not form part of the invention.
Figs. 4A, 4B, and 4C schematically illustrate a head portion pad according to an example which does not form part of the invention.
Figs. 5A, 5B, and 5C schematically illustrate a head portion pad according to a first exemplary embodiment.
Figs. 6A, 6B, and 6C schematically illustrate a head portion pad according to the first exemplary embodiment.
Figs. 7A, 7B, and 7C schematically illustrate a head portion pad according to a second exemplary embodiment.
Figs. 8A, 8B, and 8C schematically illustrate a head portion pad according to the second exemplary embodiment.

### DESCRIPTION OF THE EMBODIMENTS

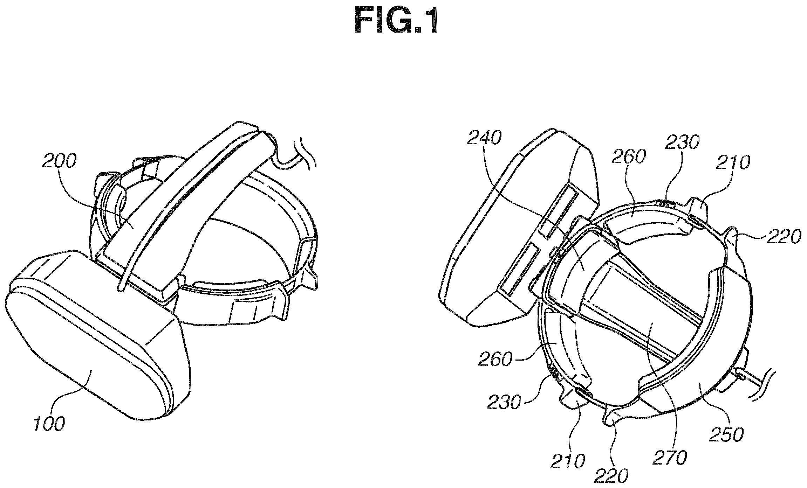

Fig. 1 schematically illustrates a head mounted device according to an example which does not form part of the invention. The head mounted device according to the present example includes an image display unit 100 and a mount unit 200. The following describes the structure in detail. The image display unit 100 provides video images to a user and is to be positioned in front of the eyes of the user. After the image display unit 100 is positioned in front of the eyes of the user by the user, the mount unit 200 is used to hold the image display unit 100 in that position. In a holding mechanism, the mount unit 200 is secured around a head portion by pulling finger handles 210 and 220 toward each other to hold the head mount device . Further, a release button 230 is pressed to release the secured mount unit 200 so that the head mounted device can be removed from the head portion of the user. The hold on the head portion uses pressing force applied to the head portion from a forehead pad 240, an occipital portion pad 250, temporal portion pads 260, and a frontal portion pad 270, which are provide to an inner side of the mount unit 200. The forehead pad 240 is configured to press a forehead portion. The occipital portion pad 250 is a pad for an occipital portion that is configured to press the occipital portion. Each of the temporal portion pads 260 is configured to press a side portion of the head between the forehead portion and a temporal portion. The frontal portion pad 270 is configured to press a frontal portion between the forehead and the top of the head. The foregoing pads have flexibility and are configured to be crushed when the force is applied, and resilience generated when the pads are crushed is used to enable the hold on the head portion. This structure also makes it possible to fit various shapes of the head portion and hold the head mounted device thereon.

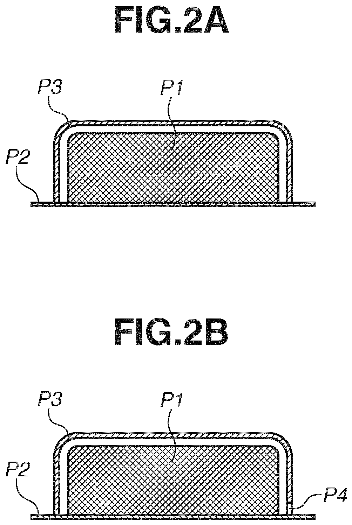

Figs. 2A and 2B each illustrate an internal structure of the forehead pad 240, the temporal portion pads 260, and the frontal portion pad 270. The forehead pad 240 is a pad for the forehead. The temporal portion pads 260 are pads for the temporal portions. The frontal portion pad 270 is a pad for the frontal portion. The foregoing pads each function as a holding member configured to hold the head portion of the user with respect to the mount unit 200 by being deformed and pressing the head portion of the user. Further, the pads are provided to the mount unit 200 as illustrated. Fig. 2A illustrates a pad in which a foamable member P1 (elastic member) is sealed with a plate member P2 and artificial leather P3 (packaging member). While the foamable member is used as the elastic member and the artificial leather as the packaging member in the present example, other materials may be used. Foamable polyurethane may be used as the foamable member. A gel member may be used as the elastic member. The elasticity of the elastic member reduces the burden on the head portion of the user, and the packaging member protects the elastic member from contamination, etc. Further, in Fig. 2B, an air escape hole P4 is formed in the structure illustrated in Fig. 2A. In the structure illustrated in Fig. 2A, when the mount unit 200 is secured around the head portion of the user, the foamable member P1 is deformed and crushed along the shape of the head portion to generate resilience. In the structure illustrated in Fig. 2B, since the air escape hole P4 is formed in the structure illustrated in Fig. 2A, the speed at which the foamable member P1 in the structure illustrated in Fig. 2B is crushed is faster than the speed at which the foamable member P1 in the structure illustrated in Fig. 2A is crushed.

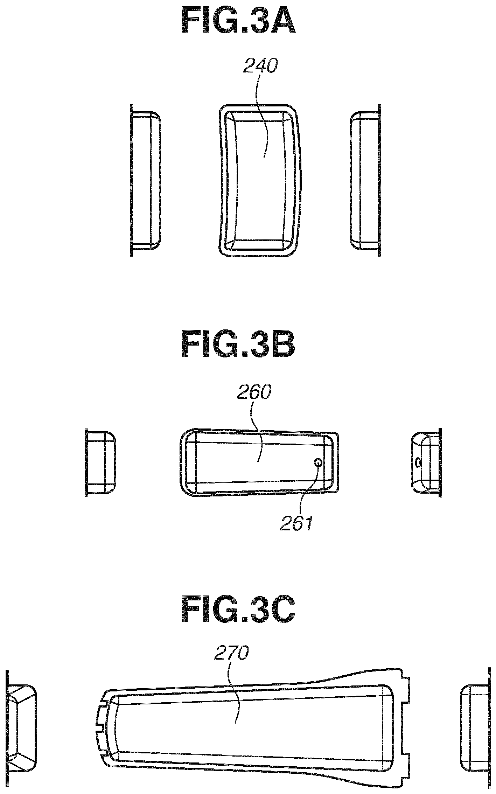

Figs. 3A, 3B, and 3C schematically illustrate the forehead pad 240, one of the temporal portion pads 260, and the frontal portion pad 270 according to the present example. An air escape hole 261 is formed in the temporal portion pad 260. In this way, when the head mounted device is mounted and the pads are crushed, air in the temporal portion pad 260 is discharged to the outside, so the speed at which the temporal portion pad 260 is crushed is faster than the speed at which the other pads are crushed. Specifically, when the user wears the mount unit 200, the respective temporal portion pads 260 are crushed first completely, so eventually the position of the image display unit 100 can be managed based on an amount by which the forehead pad 240 is crushed. Thus, the temporal portions sensitive to a press can be protected as appropriate.

Accordingly, when the user wears the head mounted device according to the present example, the distance between the eyes of the user and the image display unit 100 can be set to a predetermined distance with ease without making the user feel uncomfortable in the head mounted device. Moreover, the head mounted device can fit various shapes of the head portion when mounted.

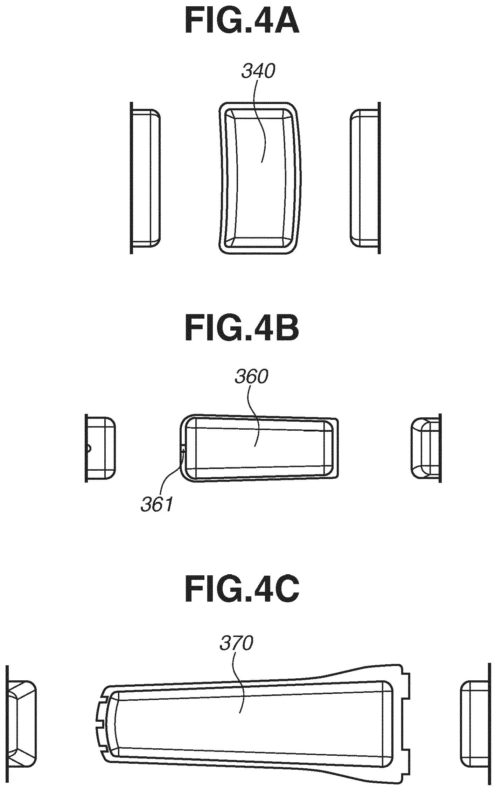

Figs. 4A, 4B, and 4C illustrate structures of a forehead pad 340, a temporal portion pad 360, and a frontal portion pad 370, in which the position of the air escape hole is changed. Fig. 4A illustrates the forehead pad 340. Fig. 4B illustrates the temporal portion pad 360. Fig. 4C illustrates the frontal portion pad 370. An air escape hole 361 is formed in a side surface of the temporal portion pad 360. In this way, the air escape hole 361 is located in a position that is not in contact with the head portion of the user, so air can be discharged from the temporal portion pad 360 without being blocked by the head portion of the user. Further, the discharge of the air can prevent the user from feeling uncomfortable in the head mounted device.

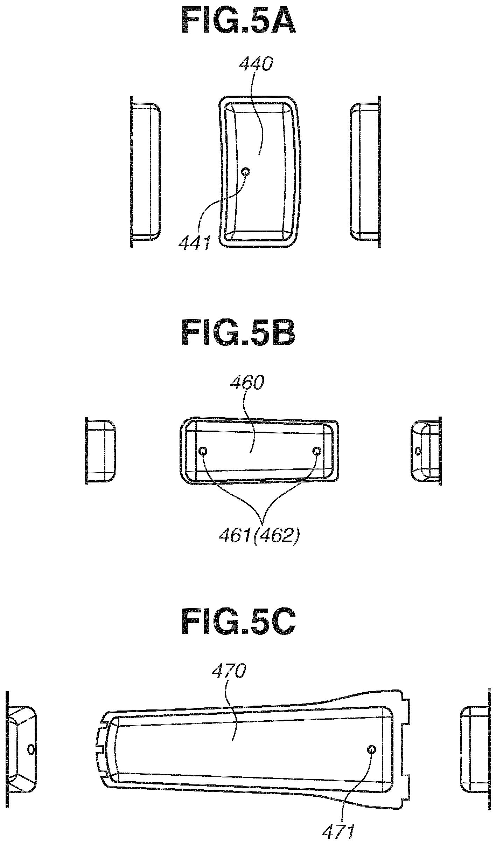

Figs. 5A, 5B, and 5C illustrate structures of a forehead pad 440, a temporal portion pad 460, and a frontal portion pad 470 according to a first exemplary embodiment. Fig. 5A illustrates the forehead pad 440. Fig. 5B illustrates the temporal portion pad 460. Fig. 5C illustrates the frontal portion pad 470. The forehead pad 440, the temporal portion pad 460, and the frontal portion pad 470 respectively include air escape holes 441, 461 (462), and 471. The number of air escape holes formed in the temporal portion pad 460 is larger than the number of air escape holes formed in the other pads, so that the amount of air discharged from the temporal portion pad 460 to the outside per unit time during the mounting operation is larger than the amount of air discharged from each of the other pads. Therefore, the speed at which the temporal portion pad 460 is crushed is faster than the speed at which the other pads are crushed.

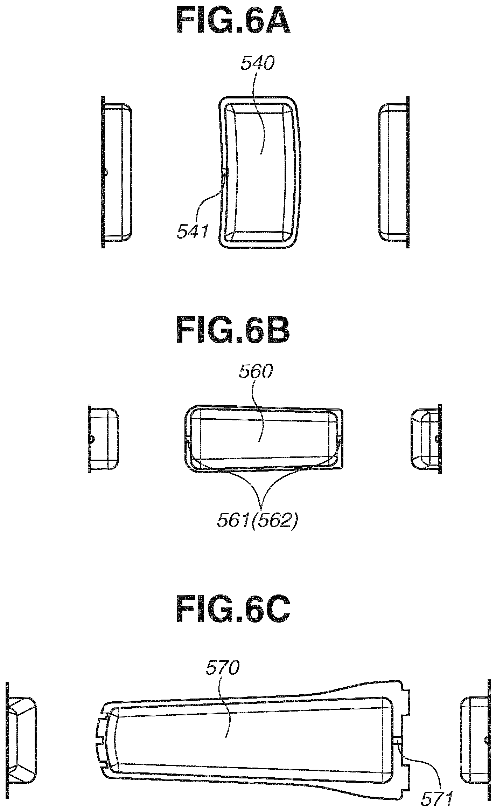

Figs. 6A, 6B, and 6C illustrate structures of a forehead pad 540, a temporal portion pad 560, and a frontal portion pad 570, in which the positions of the air escape holes are changed. Fig. 6A illustrates the forehead pad 540. Fig. 6B illustrates the temporal portion pad 560. Fig. 6C illustrates the frontal portion pad 570. Air escape holes 541, 561 (562), and 571 are respectively formed in side surfaces of the forehead pad 540, the temporal portion pad 560, and the frontal portion pad 570. The number of air escape holes formed in the temporal portion pad 560 is larger than the number of air escape holes formed in the other pads, so that the amount of air discharged from the temporal portion pad 560 to the outside per unit time during the mounting operation is larger than the amount of air discharged from each of the other pads. Therefore, the speed at which the temporal portion pad 560 is crushed is faster than the speed at which the other pads are crushed.

Further, the air escape holes 541, 561 (562), 571 in the forehead pad 540, the temporal portion pad 560, and the frontal portion pad 570 are located in positions that are not in contact with the head portion of the user. Accordingly, air can reliably be discharged.

Therefore, the distance between the eyes of the user and the image display unit 100 can be set to a predetermined distance without making the user feel uncomfortable in the head mounted device according to the present exemplary embodiment.

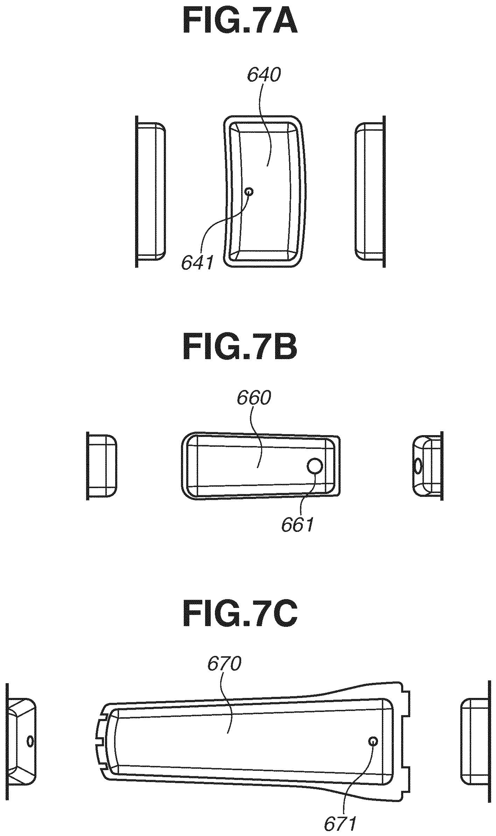

Figs. 7A, 7B, and 7C illustrate a pad 640, a temporal portion pad 660, and a frontal portion pad 670 according to a second exemplary embodiment. Fig. 7A illustrates the forehead pad 640. Fig. 7B illustrates the temporal portion pad 660. Fig. 7C illustrates the frontal portion pad 670. Air escape holes 641, 661, and 671 are respectively formed in the forehead pad 640, the temporal portion pad 660, and the frontal portion pad 670. The diameter (area) of the air escape hole 661 in the temporal portion pad 660 is larger than the respective diameters of the air escape holes 641 and 671 in the other pads, so that the amount of air discharged from the temporal portion pad 660 to the outside per unit time during the mounting operation is larger than the amount of air discharged from each of the other pads. Therefore, the speed at which the temporal portion pad 660 is crushed is faster than the speed at which the other pads are crushed.

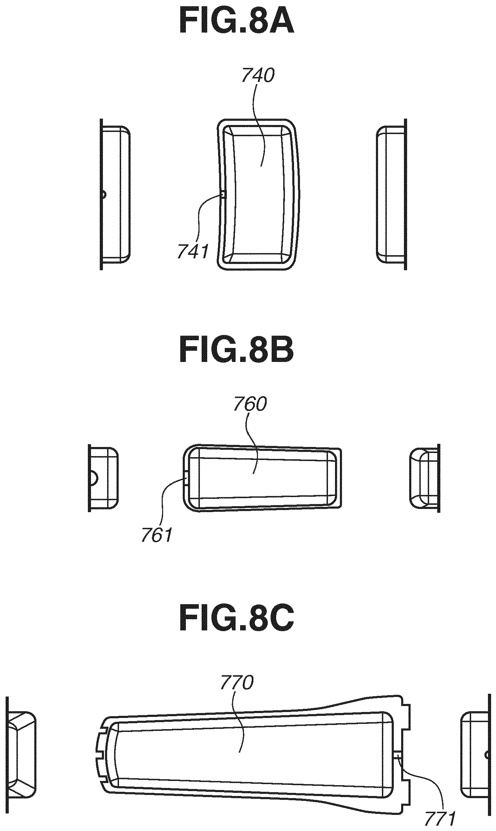

Figs. 8A, 8B, and 8C illustrate a forehead pad 740, a temporal portion pad 760, and a frontal portion pad 770, in which the positions of the air escape holes are changed. Fig. 8A illustrates the forehead pad 740. Fig. 8B illustrates the temporal portion pad 760. Fig. 8C illustrates the frontal portion pad 770. Air escape holes 741, 761, and 771 are respectively formed in side surfaces of the forehead pad 740, the temporal portion pad 760, and the frontal portion pad 770. The diameter of the air escape hole 761 in the temporal portion pad 760 is larger than the respective diameters of the air escape holes 741 and 771 in the other pads, so that the amount of air discharged from the temporal portion pad 760 to the outside per unit time during the mounting operation is larger than the amount of air discharged from each of the other pads. Therefore, the speed at which the temporal portion pad 760 is crushed is faster than the speed at which the other pads are crushed. Further, the air escape holes 741, 761, and 771 in the forehead pad 740, the temporal portion pad 760, and the frontal portion pad 770 are located in positions that are not in contact with the head portion of the user. Accordingly, air can reliably be discharged.

Therefore, the distance between the eyes of the user and the image display unit 100 can be set to a predetermined distance without making the user feel uncomfortable in the head mounted device according to the present exemplary embodiment, as in the head mounted device according to the first exemplary embodiment.

While the present invention has been described with reference to exemplary embodiments, it is to be understood that the invention is not limited to the disclosed exemplary embodiments. The scope of the following claims is to be accorded the broadest interpretation so as to encompass all such modifications.

## Claims

1. A head mounted device configured to be mounted on a head portion of a user when used, the head mounted device comprising:
display means (100) for displaying an image to the user;
mount means (200) for mounting the display means on the head portion of the user; and
a holding member (260; 360; 440, 460, 470; 540, 560, 570; 640, 660, 670; 740, 760, 770) provided to the mount means and configured to hold the head portion of the user with respect to the mount means (200), the holding member including a forehead holding member (240; 340; 440; 540; 640; 740) and temporal portion holding members (260; 360; 460; 560; 660; 760),
wherein the holding member includes an elastic member (P1) and a packaging member (P3) enclosing the elastic member (P1),
wherein the packaging member (P3) is substantially impermeable to air,
**characterized in that**:
an air escape hole (261; 361; 441, 461, 462, 471; 541, 561, 562, 571; 641, 661, 671; 741, 761, 771) is formed in the packaging member (P3),
wherein the escape hole is formed in the forehead holding member (640; 740) and in the temporal portion holding members (660; 760), and
wherein an area of the escape hole (661; 761) formed in the respective temporal portion holding members (660; 760) is larger than an area of the escape hole (641; 741) formed in the forehead holding member (640; 740).

2. The head mounted device according to claim 1, wherein the air escape hole (361; 541, 561, 562, 571; 741, 761, 771) is formed in a position that is not in contact with the head portion of the user when the head portion of the user is held by the holding member (360; 540, 560, 570; 740, 760, 770) .

3. The head mounted device according to claim 1 or claim 2, wherein a plurality of air escape holes (461, 462; 561, 562) is formed in the packaging member (P3).

4. The head mounted device according to any preceding claim, wherein the holding member further includes a frontal portion holding member (270; 370; 470; 570; 670; 770).

5. The head mounted device according to any preceding claim, wherein the holding member further includes an occipital portion holding member (250).

6. The head mounted device according to any preceding claim, wherein the escape hole (261; 361; 461, 462; 561, 562; 661; 761) is formed in the respective temporal portion holding members (260; 360; 460; 560; 660; 760).

7. The head mounted device according to any preceding claim, wherein the escape hole is formed in the forehead holding member (440; 540) and in the temporal portion holding members (460; 560), and
wherein a number of the escape holes (461, 462; 561, 562) formed in the respective temporal portion holding members (460; 560) is larger than a number of the escape holes (441, 541) formed in the forehead holding member (440; 540).

8. The head mounted device according to any preceding claim, wherein when the head mounted device is mounted on the user, a speed at which the respective temporal portion holding members (260; 360; 460; 560; 660; 760) are crushed is faster than a speed at which the forehead holding member (240; 340; 440; 540; 640; 740) is crushed due to the fact that pressing force between the head mounted device and the head portion of the user discharges air in the holding member through the escape hole (261; 361; 441, 461, 462, 471; 541, 561, 562, 571; 641, 661, 671; 741, 761, 771).

9. The head mounted device according to any preceding claim, wherein when the head mounted device is mounted on the user, pressing force between the head mounted device and the head portion of the user discharges air in the holding member (260; 360; 440, 460, 470; 540, 560, 570; 640, 660, 670; 740, 760, 770) through the escape hole (261; 361; 441, 461, 462, 471; 541, 561, 562, 571; 641, 661, 671; 741, 761, 771).

10. The head mounted device according to any preceding claim, wherein the elastic member (P1) is foamable polyurethane.

## Patentansprüche

1. Am Kopf zu tragende Vorrichtung, die konfiguriert ist, bei Benutzung an einem Kopfabschnitt eines Benutzers befestigt zu werden, wobei die am Kopf zu tragende Vorrichtung umfasst:
eine Anzeigeeinrichtung (100) zum Anzeigen eines Bildes für den Benutzer;
eine Befestigungseinrichtung (200) zum Befestigen der Anzeigeeinrichtung am Kopfabschnitt des Benutzers; und
ein Halteelement (260; 360; 440, 460, 470; 540, 560, 570; 640, 660, 670; 740, 760, 770), das an der Befestigungseinrichtung vorgesehen und konfiguriert ist, den Kopfabschnitt des Benutzers bezüglich der Befestigungseinrichtung (200) zu halten, wobei das Halteelement ein Stirnhalteelement (240; 340; 440; 540; 640; 740) und Schläfenabschnittshalteelemente (260; 360; 460; 560; 660; 760) enthält,
wobei das Halteelement ein elastisches Element (P1) und ein das elastische Element (P1) umgebendes Einhüllelement (P3) enthält,
wobei das Einhüllelement (P3) im Wesentlichen luftundurchlässig ist,
**dadurch gekennzeichnet, dass**:
ein Luftaustrittsloch (261; 361; 441, 461, 462, 471; 541, 561, 562, 571; 641, 661, 671; 741, 761, 771) im Einhüllelement (P3) ausgebildet ist,
wobei das Austrittsloch im Stirnhalteelement (640; 740) und in den Schläfenabschnittshalteelementen (660; 760) ausgebildet ist, und
wobei eine Fläche des in den jeweiligen Schläfenabschnittshalteelementen (660; 760) ausgebildeten Austrittslochs (661; 761) größer als eine Fläche des im Stirnhalteelement (640; 740) ausgebildeten Austrittslochs (641; 741) ist.

2. Am Kopf zu tragende Vorrichtung nach Anspruch 1, wobei das Luftaustrittsloch (361; 541, 561, 562, 571; 741, 761, 771) an einer Position ausgebildet ist, die sich nicht in Kontakt mit dem Kopfabschnitt des Benutzers befindet, wenn der Kopfabschnitt des Benutzers vom Halteelement (360; 540, 560, 570; 740, 760, 770) gehalten wird.

3. Am Kopf zu tragende Vorrichtung nach Anspruch 1 oder 2, wobei im Einhüllelement (P3) mehrere Luftaustrittslöcher (461, 462; 561, 562) ausgebildet sind.

4. Am Kopf zu tragende Vorrichtung nach einem der vorhergehenden Ansprüche, wobei das Halteelement ferner ein Frontalabschnittshalteelement (270; 370; 470; 570; 670; 770) enthält.

5. Am Kopf zu tragende Vorrichtung nach einem der vorhergehenden Ansprüche, wobei das Halteelement ferner ein Hinterkopfabschnitt-Halteelement (250) enthält.

6. Am Kopf zu tragende Vorrichtung nach einem der vorhergehenden Ansprüche, wobei das Austrittsloch (261; 361; 461, 462; 561, 562; 661; 761) in den jeweiligen Schläfenabschnittshalteelementen (260; 360; 460; 560; 660; 760) ausgebildet ist.

7. Am Kopf zu tragende Vorrichtung nach einem der vorhergehenden Ansprüche, wobei das Austrittsloch im Stirnhalteelement (440; 540) und in den Schläfenabschnittshalteelementen (460; 560) ausgebildet ist, und
wobei eine Anzahl der in den jeweiligen Schläfenabschnittshalteelementen (460; 560) ausgebildeten Austrittslöcher (461, 462; 561, 562) größer ist als eine Anzahl der im Stirnhalteelement (440; 540) ausgebildeten Austrittslöcher (441, 541).

8. Am Kopf zu tragende Vorrichtung nach einem der vorhergehenden Ansprüche, wobei, wenn die am Kopf zu tragende Vorrichtung am Benutzer befestigt wird, aufgrund dessen, dass eine Druckkraft zwischen der am Kopf befestigten Vorrichtung und dem Kopfabschnitt des Benutzers Luft im Halteelement durch das Austrittsloch (261; 361; 441, 461, 462, 471; 541, 561, 562, 571; 641, 661, 671; 741, 761, 771) ausstößt, eine Geschwindigkeit, bei welcher die jeweiligen Schläfenabschnittshalteelemente (260; 360; 460; 560; 660; 760) zusammengedrückt werden, höher ist als eine Geschwindigkeit, mit welcher das Stirnhalteelement (240; 340; 440; 540; 640; 740) zusammengedrückt wird.

9. Am Kopf zu tragende Vorrichtung nach einem der vorhergehenden Ansprüche, wobei, wenn die am Kopf zu tragende Vorrichtung am Benutzer befestigt wird, eine Druckkraft zwischen der am Kopf befestigten Vorrichtung und dem Kopfabschnitt des Benutzers Luft im Halteelement (260; 360; 440, 460, 470; 540, 560, 570; 640, 660, 670; 740, 760, 770) durch das Austrittsloch (261; 361; 441, 461, 462, 471; 541, 561, 562, 571; 641, 661, 671; 741, 761, 771) ausstößt.

10. Am Kopf zu tragende Vorrichtung nach einem der vorhergehenden Ansprüche, wobei das elastische Element (P1) aufschäumbares Polyurethan ist.

## Revendications

1. Dispositif visiocasque configuré, en utilisation, pour être monté sur une partie tête d'un utilisateur, le dispositif visiocasque comprenant :
un moyen d'affichage (100) destiné à afficher une image à destination de l'utilisateur ;
un moyen de support (200) destiné à supporter le moyen d'affichage sur la partie tête de l'utilisateur ; et
un élément de maintien (260 ; 360 ; 440, 460, 470 ; 540, 560, 570 ; 640, 660, 670 ; 740, 760, 770) disposé sur le moyen de support et configuré pour maintenir la partie tête de l'utilisateur par rapport au moyen de support (200), l'élément de maintien comprenant un élément de maintien de front (240 ; 340 ; 440 ; 540 ; 640 ; 740) et des éléments de maintien de partie temporale (260 ; 360 ; 460 ; 560 ; 660 ; 760),
dans lequel l'élément de maintien comprend un élément élastique (P1) et un élément de conditionnement (P3) enfermant l'élément élastique (P1),
dans lequel l'élément de conditionnement (P3) est sensiblement imperméable à l'air,
**caractérisé en ce que** :
un trou d'échappement d'air (261 ; 361 ; 441, 461, 462, 471 ; 541, 561, 562, 571 ; 641, 661, 671 ; 741, 761, 771) est formé dans l'élément de conditionnement (P3),
dans lequel le trou d'échappement est formé dans l'élément de maintien de front (640 ; 740) et dans les éléments de maintien de partie temporale (660 ; 760), et
dans lequel une superficie du trou d'échappement (661 ; 761) formé dans les éléments de maintien de partie temporale respectifs (660 ; 760) est plus grande qu'une superficie du trou d'échappement (641 ; 741) formé dans l'élément de maintien de front (640 ; 740).

2. Dispositif visiocasque selon la revendication 1, dans lequel le trou d'échappement d'air (361 ; 541, 561, 562, 571 ; 741, 761, 771) est formé à une position qui n'est pas en contact avec la partie tête de l'utilisateur lorsque la partie tête de l'utilisateur est maintenue par l'élément de maintien (360 ; 540, 560, 570 ; 740, 760, 770) .

3. Dispositif visiocasque selon la revendication 1 ou la revendication 2, dans lequel une pluralité de trous d'échappement d'air (461, 462 ; 561, 562) est formée dans l'élément de conditionnement (P3).

4. Dispositif visiocasque selon l'une quelconque des revendications précédentes, dans lequel l'élément de maintien comprend en outre un élément de maintien de partie frontale (270 ; 370 ; 470 ; 570 ; 670 ; 770).

5. Dispositif visiocasque selon l'une quelconque des revendications précédentes, dans lequel l'élément de maintien comprend en outre un élément de maintien de partie occipitale (250).

6. Dispositif visiocasque selon l'une quelconque des revendications précédentes, dans lequel le trou d'échappement (261 ; 361 ; 461, 462 ; 561, 562 ; 661 ; 761) est formé dans les éléments de maintien de partie temporale respectifs (260 ; 360 ; 460 ; 560 ; 660 ; 760).

7. Dispositif visiocasque selon l'une quelconque des revendications précédentes, dans lequel le trou d'échappement est formé dans l'élément de maintien de front (440 ; 540) et dans les éléments de maintien de partie temporale (460 ; 560), et
dans lequel un nombre des trous d'échappement (461, 462 ; 561, 562) formés dans les éléments de maintien de partie temporale respectifs (460 ; 560) est supérieur à un nombre des trous d'échappement (441, 541) formés dans l'élément de maintien de front (440 ; 540).

8. Dispositif visiocasque selon l'une quelconque des revendications précédentes, dans lequel, lorsque le dispositif visiocasque est monté sur l'utilisateur, une vitesse à laquelle s'écrasent les éléments de maintien de partie temporale respectifs (260 ; 360 ; 460 ; 560 ; 660 ; 760) est plus rapide qu'une vitesse à laquelle s'écrase l'élément de maintien de front (240 ; 340 ; 440 ; 540 ; 640 ; 740) en raison du fait qu'une force de pression entre le dispositif visiocasque et la partie tête de l'utilisateur expulse l'air dans l'élément de maintien par le trou d'échappement (261 ; 361 ; 441, 461, 462, 471 ; 541, 561, 562, 571 ; 641, 661, 671 ; 741, 761, 771) .

9. Dispositif visiocasque selon l'une quelconque des revendications précédentes, dans lequel, lorsque le dispositif visiocasque est monté sur l'utilisateur, une force de pression entre le dispositif visiocasque et la partie tête de l'utilisateur expulse l'air dans l'élément de maintien (260 ; 360 ; 440, 460, 470 ; 540, 560, 570 ; 640, 660, 670 ; 740, 760, 770) par le trou d'échappement (261 ; 361 ; 441, 461, 462, 471 ; 541, 561, 562, 571 ; 641, 661, 671 ; 741, 761, 771).

10. Dispositif visiocasque selon l'une quelconque des revendications précédentes, dans lequel l'élément élastique (P1) est du polyuréthane expansible.
